# EUROPÄISCHE PATENTSCHRIFT

(11) **EP 4 482 610 B1**
(45) Veröffentlichungstag und Bekanntmachung des Hinweises auf die Patenterteilung: **23.07.2025**
(21) Anmeldenummer: 23705545.4
(22) Anmeldetag: 16.02.2023
(51) Int. Cl.: B01D 63/10

(54) **HOCHTEMPERATUR-SPIRALWICKELMODUL AUS METALLISCHEN KOMPONENTEN**
HIGH-TEMPERATURE SPIRAL-WOUND MODULE MADE OF METAL COMPONENTS
MODULE D'ENROULEMENT EN SPIRALE À HAUTE TEMPÉRATURE CONSTITUÉ DE COMPOSANTS MÉTALLIQUES

(30) Priorität: 21.02.2022 DE 202022000423 U
(43) Veröffentlichungstag der Anmeldung: 01.01.2025
(73) Patentinhaber: Evonik Operations GmbH, 45128 Essen (DE)
(72) Erfinder: BRUGGER, Bastian Matthias, 47199 Duisburg (DE); LOCHTHOVE, Marc, 45770 Marl (DE); GEHRING, Christian, 45770 Marl (DE); KUBE, Michael, 45721 Haltern am See (DE); DAHLHUES, Meike, 45772 Marl (DE)
(74) Vertreter: Evonik Patent Association
(86) Internationale Anmeldenummer: PCT/EP2023/053867
(87) Internationale Veröffentlichungsnummer: WO 2023/156509

(56) Entgegenhaltungen:
- WO-A1-2007/123206
- WO-A1-2012/039302
- WO-A1-2014/141967
- WO-A2-2014/151695
- DE-U1- 202022 000 424
- US-A- 3 872 014
- US-A1- 2010 078 378
- US-A1- 2011 290 711
- US-A1- 2015 290 589
- US-A1- 2019 275 461
- US-B1- 6 224 767
- US-B2- 10 717 049
- US-B2- 10 799 835
- US-B2- 8 758 611
- US-B2- 9 993 776

## Beschreibung

Die Neuerung betrifft ein Spiralwickelmodul umfassend mindestens die folgenden Bauteile:
a) ein metallisches, hohlzylindrisches Permeatrohr, in dessen Wand sich Öffnungen radial erstrecken;
b) eine im Wesentlichen flächige, rechteckige Membran, die um das Permeatrohr spiralförmig herumgewickelt ist, wodurch ein im Wesentlichen zylindrischer Spiralwickel gebildet ist, der sich koaxial zum Permeatrohr erstreckt;
c) zwei Axialanschläge (anti-telescoping devices -ATD), welche beiderseits des Spiralwickels auf das Permeatrohr aufgepasst sind und jeweils an der jeweiligen Stirnseite des Spiralwickels anliegen, wobei die Axialanschläge mit axial fluiddurchlässigen Durchlässen versehen sind;
d) ein metallisches, hohlzylindrisches Außenrohr, welches sich koaxial zum Permeatrohr erstreckt, den Spiralwickel umschließt und mit beiden Axialanschlägen gefügt ist.

Membranen dienen zum Trennen von flüssigen oder gasförmigen Stoffgemischen. Sie werden in der chemischen Verfahrenstechnik, Lebensmitteltechnologie und Medizintechnik eingesetzt. Die Membranen werden in der Regel nicht separat in den zugehörigen Trennapparat eingebaut, sondern in Form eines Membranmoduls. Ein Membranmodul ist eine Baugruppe, die eine oder mehrere Membranen enthält und für den Einsatz in einen Trennapparat bestimmt ist. Eine besondere Bauform eines Membranmoduls ist ein so genanntes Spiralwickelmodul. In einem Spiralwickelmodul ist eine im Wesentlichen flache, rechteckige Membran spiralförmig um ein Rohr aufgewickelt. Auf diese Weise wird eine große Membranfläche in einer geringen Baugröße des Moduls untergebracht. Der Spiralwickel wird von einer Stirnseite mit dem zu trennenden Stoffgemisch (dem Feed) beaufschlagt. Der Teil des Stoffgemisches, welches die Membran überwindet (das Permeat), gelangt durch Löcher in das zentral verlaufende Rohr und wird damit aus dem Modul abgeführt. Das Rohr wird daher auch als Permeatrohr bezeichnet. Der Teil des Stoffgemisches, welches die Membran nicht überwindet (das Retentat), verlässt das Modul über die andere Stirnseite des Spiralwickels.

Die Grundlagen der Membrantechnik und auch die Bauweise von Membranmodulen schildern:
Thomas Melin; Robert Rautenbach: Membranverfahren: Grundlagen der Modul- und Anlagenauslegung. 2. Auflage 2004. Springer Berlin Heidelberg 2004 DOI 10.1007/978-3-662-08653-7

Ein Spiralwickelmodul der eingangs genannten Art ist aus der EP 3328521 B1 bekannt. Genauer gesagt, beschreibt EP 3328521 B1 eine Kartusche zum Einsatz in einen Trennapparat, die wahlweise mit einem Spiralwickelmodul oder mit einem Hohlfasermodul bestückt werden kann. Diese Flexibilität wird mit einem vergleichsweise komplizierten Aufbau erkauft, der unter harschen Bedingungen Nachteile aufweist. Insbesondere beim Trennen von Flüssigkeitsgemischen bei hohen Temperaturen sind die verbauten Kunststoffe einer hohen Belastung ausgesetzt, sodass von einer geringen Lebensdauer auszugehen ist. Im dauerfesten Bereich sind indes nur geringe Betriebstemperaturen unter 120°C zur realisieren. Dies gilt insbesondere hinsichtlich der Barriere, welche eine Überströmung des Membranwickels verhindert. Diese Barriere ist bei dem in EP 3328521 B1 beschriebenen Membranwickelmodul als ein Schrumpfschlauch, insbesondere aus Polyolefin, PVC oder Polyimiden ausgeführt. Der Schrumpfschlauch ist auf den Membranwickel aufgeschrumpft. Bei höheren Trenntemperaturen dehnt sich der Schrumpfschlauch wieder aus, sodass die Barriere ihre Funktion als Überstromschutz nicht mehr erfüllen kann.

Ein Spiralwickelmodul für hohe Drücke ist aus CN 111450709 A1 bekannt. Die Axialanschläge (anti telescoping devices ATDs) sind nicht auf das Permeatrohr aufgepasst, sondern mithilfe eines zentral im Permeatrohr verlaufenden Bolzens stirnseitig mit dem Permeatrohr verpresst. Der so entstehende Verband aus Permeatrohr, Membranwickel, ATDs und Bolzen ist in ein Außenrohr eingesetzt und mit Sprengringen gegen axiale Verschiebung im Außenrohr gesichert. Dieser Aufbau umfasst sehr viele Bauteile und ist sehr aufwendig zu montieren. Dadurch steigen die Herstellungskosten. Im Umfeld einer Hochdruckanwendung mag dies gerechtfertigt sein; bei hohen Temperaturen und niedrigen Drücken jedoch nicht.

Ein solches Spiralwickelmodul ist auch bekannt aus der WO 2012/039302 A1, das über eine Verbindungsstruktur verfügt, bei der Membranelemente über ein Zentralrohr miteinander verbunden werden können. Das Spiralmembranmodul nimmt mehrere in Reihe geschaltete Spiralmembranelemente in einem Druckbehälter auf, indem die Membranelemente mit einem Zentralrohr versehen sind. Es erstreckt sich über so genannte Anti-Teleskopteile und weist Eingriffsteile am Außenumfang auf. Weiterhin ist ein Verbindungsteil umfasst, das die Eingriffsteile benachbarter Membranelemente überspannt, und das mit den Eingriffsteilen in Eingriff steht. Weiterhin ist beispielsweise ein Spiralwickelmodul aus der DE 20 2022 000 424 U1 bekannt, das ein metallisches, hohlzylindrisches Permeatrohr umfasst, in dessen Wand sich Öffnungen radial erstrecken. Die im Wesentlichen flächige, rechteckige Membran ist um das Permeatrohr spiralförmig zu einer zylindrischen Spiralwickel und koaxial zum Permeatrohr gewickelt. Weiterhin weist dieses Spiralwickelmodul zwei Axialanschläge auf, welche beiderseits des Spiralwickels auf das Permeatrohr aufgepasst sind und jeweils an der jeweiligen Stirnseite des Spiralwickels anliegen, wobei die Axialanschläge mit axial fluiddurchlässigen Öffnungen versehen und mit deinem metallischen Mantelrohr verschraubt und hiergegen abgedichtet sind.

Ein Spiralwickelmodul mit einem metallischen Außenrohr ist aus der US 3 872 014 A bekannt, , wobei das Außenrohr durch Umwickeln mit einem dünnen Metallblech hergestellt wird.

Der Neuerung lag daher die Aufgabe zu Grunde, ein Spiralwickelmodul anzugeben, welches bei hohen Betriebstemperaturen vorzugsweise über 150 °C einsetzbar ist einen einfachen, robusten und preiswerten Aufbau aufweist.

Gelöst wird diese Aufgabe dadurch, dass mindestens einer der beiden Axialanschläge einen hülsenförmigen Fortsatz aufweist, welcher an seinem Umfang von dem Außenrohr dergestalt umschlossen ist, dass eine kraftschlüssige und/oder formschlüssige Verbindung zwischen dem Außenrohr und dem Axialanschlag über dessen Fortsatz realisiert ist.

Gegenstand der Neuerung ist daher ein Spiralwickelmodul umfassend mindestens die folgenden Bauteile:
a) ein metallisches, hohlzylindrisches Permeatrohr, in dessen Wand sich Öffnungen radial erstrecken;
b) eine im Wesentlichen flächige, rechteckige Membran, die um das Permeatrohr spiralförmig herumgewickelt ist, wodurch ein im Wesentlichen zylindrischer Spiralwickel gebildet ist, der sich koaxial zum Permeatrohr erstreckt;
c) zwei Axialanschläge (anti-telescoping devices -ATD), welche beiderseits des Spiralwickels auf das Permeatrohr aufgepasst sind und jeweils an der jeweiligen Stirnseite des Spiralwickels anliegen, wobei die Axialanschläge mit axial fluiddurchlässigen Durchlässen versehen sind und wobei mindestens einer der beiden Axialanschläge einen hülsenförmigen Fortsatz aufweist;
d) ein metallisches, hohlzylindrisches Außenrohr, welches sich koaxial zum Permeatrohr erstreckt, den Spiralwickel umschließt und mit beiden Axialanschlägen gefügt ist, wobei eine kraftschlüssige und/oder formschlüssige Verbindung zwischen dem Außenrohr und dem Axialanschlag mit dem Fortsatz dadurch realisiert ist, dass der hülsenförmige Fortsatz an seinem Umfang von dem Außenrohr umschlossen ist.

Die Neuerung soll nun anhand von Ausführungsbeispielen verdeutlicht werden. Hierfür zeigen:
- Fig. 1: Spiralwickelmodul, Totalansicht;
- Fig. 2: Spiralwickelmodul, Schnittdarstellung;
- Fig. 3: Spiralwickelmodul, Stirnansicht;
- Fig. 4: Detailvergrößerung der Verbindung zwischen Axialanschlag und Außenrohr.

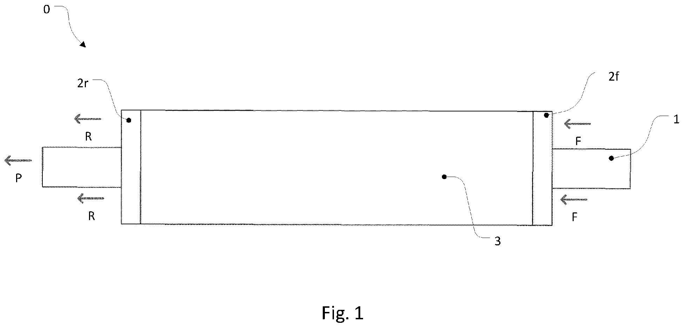

Figur 1 zeigt eine Totalansicht des Spiralwickelmoduls 0. Zu erkennen ist ein zentral verlaufendes Permeatrohr 1, auf dem zwei Axialanschläge 2f, 2r aufgepasst sind. Der erste Axialanschlag 2f ist feedseitig angeordnet, der zweite Axialanschlag 2r retentatseitig. Die beiden Axialanschläge 2f,2r sind über ein Außenrohr 3 miteinander verbunden.

Der Feed F strömt durch den ersten Axialanschlag 2f in das Spiralwickelmodul 0 ein. Durch das Permeatrohr 1 tritt das Permeat P aus dem Spiralwickelmodul 0 wieder aus. Das Retentat R tritt durch den zweiten Axialanschlag 2r aus dem Spiralwickelmodul 0 aus.

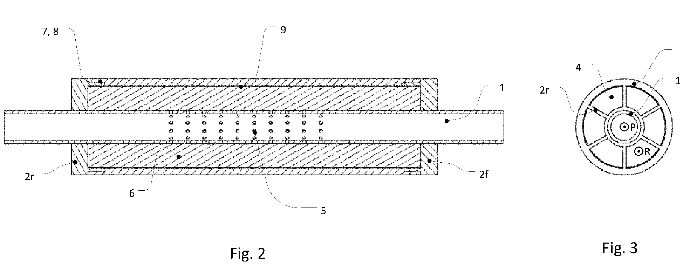

Um den Durchtritt des Feeds F bzw. des Retentats R durch die Axialanschläge 2f, 2r zu ermöglichen, sind diese mit mehreren, großzügigen Durchlässen 4 versehen. Die Durchlässe 4 sind lediglich in Figur 3 zu erkennen.

Der genaue Aufbau des Spiralwickelmoduls 0 geht aus der Schnittdarstellung in Figur 2 hervor. Zentral erstreckt sich das Permeatrohr 1. Es ist hohlzylindrisch und besteht aus Stahl. Die Wandung des Permeatrohrs 1 ist mit einer Vielzahl von Öffnungen 5 versehen, welche die Wandung radial durchsetzen.

Um das Permeatrohr 1 herum gewickelt ist ein Spiralwickel 6. Der Spiralwickel entsteht dadurch, dass eine im Wesentlichen flache, rechteckige Membran spiralförmig um das Permeatrohr 1 herumgewickelt wird. So entsteht aus der flachen Membran ein im Wesentlichen zylindrischer Spiralwickel, der sich entlang des Permeatrohrs 1 erstreckt. In den Spiralwickel 6 mit eingewickelt sein kann ein Abstandshalter (Spacer - nicht dargestellt), der dafür sorgt, dass die einzelnen Windungen der Spirale nicht direkt aufeinander aufliegen.

Damit der Spiralwickel 6 unter Last nicht axial teleskopiert, wird er jeweils stirnseitig von den Axialanschlägen 2f, 2r abgestützt. Die Axialanschläge 2f, 2r liegen stirnseitig an den Spiralwickel 6 an und sind auf das Permeatrohr 1 aufgepasst. Auf diese Weise übertragen die Axialanschläge 2f, 2r Kräfte zwischen dem Spiralwickel 6 und dem Permeatrohr 1. Durch die Position der Axialanschläge 2r,2f zum Permeatrohr 1 wird die axiale Position des Spiralwickels 1 definiert und insbesondere ein Teleskopieren verhindert. Die Axialanschläge werden daher auch als anti-telescoping device ATD bezeichnet.

In Figur 2 nicht zu erkennen ist, dass die ATDs 2r,2f eine Vielzahl von großflächigen, Segmentartig ausgeformte Durchtrittsöffnungen 4 aufweisen, durch die der Feed F bzw. das Retentat R passieren kann. Die Durchtrittsöffnungen 4 sind in der Seitenansicht der Figur 3 zu erkennen. Zwischen den Durchtrittsöffnungen 4 sind die Axialanschläge stegartig ausgeformt. Die Stege liegen in Figur 2 in der Schnittebene.

Mindestens einer beiden Axialanschläge weist innenseitig einen hülsenartig geformten Fortsatz 7 auf. Im vorliegenden Ausführungsbeispiel sind es beide Axialanschläge 2r, 2f. Mit ihrem jeweiligen Fortsatz 7 sind die Axialanschläge jeweils in einen korrespondierenden Sitz auf der Innenseite des Außenrohrs 3 eingesetzt.

An der Kontaktstelle zwischen dem hülsenförmigen Fortsatz 7 und dem korrespondierenden Sitz des Außenrohrs 3 wird eine kraftschlüssige und/oder formschlüssige Verbindung 8 realisiert, welche den mit dem Fortsatz 7 versehenen Axialanschlag mit dem Außenrohr 3 fügt.

Als kraftschlüssige und/oder formschlüssige Verbindung 8 kommt wahlweise eine Pressverbindung oder eine Schraubverbindung in Betracht.

Im Falle einer Pressverbindung ist der Fortsatz 7 an seinem Umfang zylindrisch. Der Sitz ist ebenfalls zylindrisch. Der Außendurchmesser des Fortsatz 7 und der Innendurchmesser des Sitzes sind dann so bemessen, dass zwischen dem Fortsatz 7 und dem Sitz eine Presspassung gebildet wird, welche die Pressverbindung ausbildet.

Im Falle einer Schraubverbindung ist der Fortsatz 7 an seinem Umfang mit einem Außengewinde versehen. Der Sitz ist als ein Innengewinde ausgeführt. Der Fortsatz 7 ist mit seinem Außengewinde in das Innengewinde eingeschraubt. Auf diese Weise wird eine Schraubverbindung zwischen dem mit dem Fortsatz 7 versehenen Axialanschlag 2r, 2f und dem Außenrohr 3 realisiert.

Auf beide Weisen ist ein Kraftschluss zwischen Außenrohr 3 und Axialanschläge 2r,2f möglich. Ebenso wird das Permeatrohr 1 in dem Außenrohr zentriert. Die Peripherie des Außenrohrs 1 dient als Kontaktfläche zum hier nicht dargestellten Trennapparat, in den das Spiralwickelmodul 0 eingesetzt wird. Auf eine Abdichtung zwischen der Peripherie des Außenrohrs und der Kontaktfläche des Trennapparats kann verzichtet werden, weil das Spiralwickelmodul 0 in sich dicht ist. Das Dichtungskonzept wird weiter unten beschrieben.

Im Betrieb strömt der Feed F durch die Durchlässe im feedseitigen Axialanschlag 2f in den Spiralwickel 6 ein. Das Permeat überwindet die Membran, fließt nach Innen und durch die Öffnungen 5 in das Permeatrohr 1 ein. Durch das Permeatrohr 1 verlässt das Permeat P das Spiralwickelmodul. Der Teil des Feeds, der die Membran nicht passieren kann, verlässt als Retentat R den Spiralwickel 6 durch die Durchtrittsöffnungen 4 des retentatseitigen Axialanschlags 2r.

Erfindungsgemäß umfasst das Spiralwickelmodul 0 innerhalb des Außenrohrs 3 eine Folie 9, welcher den Spiralwickel nach außen abdichtet. Dies verhindert ein Überströmen des Membranwickels 6 mit unzureichendem Permeatanfall.

Die Folie 9 besteht vorzugsweise aus Metall oder einem anderen temperaturstabilen Werkstoff. Insbesondere kommen Folien aus einer Metalllegierung wie beispielsweise Stahl, Aluminiumlegierung oder Kupferlegierung in Betracht. Ebenso sind temperaturstabile Polymere verwendbar, wie beispielsweise Polyimid. Wichtig ist, dass die Folie aus einem Werkstoff ist, der bei Betriebstemperatur dauerfest ist.

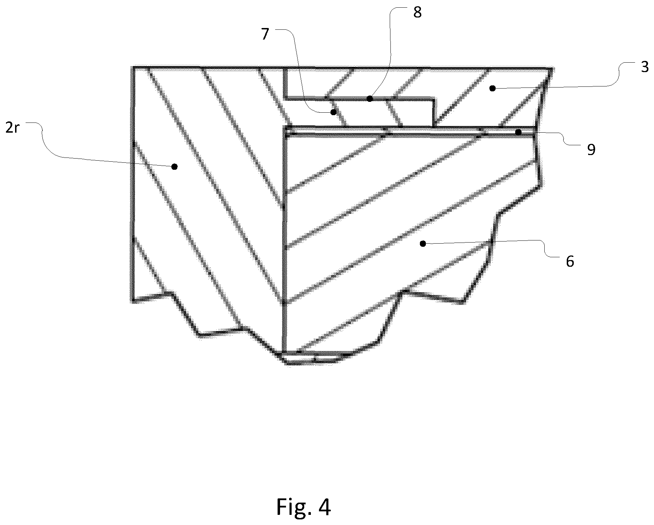

Die Folie 9 ist rechteckig und stramm um den Spiralwickel 6 herumgewickelt. Der Wickelwinkel der Folie 9 beträgt zwischen 360° und 400°, sodass die Folie 9 einen Überlappungsbereich von 0° bis 40° ausbildet. Die Folie 9 ist insbesondere in der vergrößerten Einzelheit der Figur 4 zu erkennen. Im Überlappungsbereich ist die Folie 9 ist mit einer Schicht aus einem temperaturbeständigen Kleb-/Dichtstoff mit sich selbst verklebt. Die Schicht ist so dünn, dass sie selbst in der Vergrößerung der Figur 4 nicht zu erkennen ist.

Das Dichtungskonzept sieht vor, dass der hülsenförmige Fortsatz 7 ist an seiner Innenseite entweder mit dem Spiralwickel 1 oder - sofern vorhanden - mit der Folie 9 verklebt ist, um das Spiralwickelmodul 0 nach außen abzudichten. Zum Verkleben wird ein temperaturstabiler Kleb-/Dichtstoff verwendet, mit dem auch der Spiralwickel 1 und/oder die Folie verklebt wird.

Die kraft -und/oder formschlüssige Verbindung 8 braucht dann nicht abgedichtet zu werden.

### Bezugszeichenliste

- F: Feed
- P: Permeat
- R: Retentat
- 0: Spiralwickelmodul
- 1: Permeatrohr
- 2f: Axialanschlag feedseitig
- 2r: Axialanschlag retentatseitig
- 3: Außenrohr
- 4: Durchlass
- 5: Spiralwickel
- 6: Fortsatz
- 7: Öffnungen
- 8: Kraft- und/oder formschlüssige Verbindung
- 9: Folie

## Patentansprüche

1. Spiralwickelmodul (0) umfassend mindestens die folgenden Bauteile:
a) ein metallisches, hohlzylindrisches Permeatrohr (1), in dessen Wand sich Öffnungen (5) radial erstrecken;
b) eine im Wesentlichen flächige, rechteckige Membran, die um das Permeatrohr (1) spiralförmig herumgewickelt ist, wodurch ein im Wesentlichen zylindrischer Spiralwickel (6) gebildet ist, der sich koaxial zum Permeatrohr (1) erstreckt;
c) zwei Axialanschläge (anti-telescoping devices -ATD) (2r, 2f), welche beiderseits des Spiralwickels (6) auf das Permeatrohr (1) aufgepasst sind und jeweils an der jeweiligen Stirnseite des Spiralwickels (6) anliegen, wobei die Axialanschläge (2r, 2f) mit axial fluiddurchlässigen Durchlässen (4) versehen sind;
d) ein metallisches, hohlzylindrisches Außenrohr (3), welches sich koaxial zum Permeatrohr (1) erstreckt, den Spiralwickel (6) umschließt und mit beiden Axialanschlägen (2r, 2f) gefügt ist; wobei
e) mindestens einer der beiden Axialanschläge (2r) einen hülsenförmigen Fortsatz (7) aufweist, welcher an seinem Umfang von dem Außenrohr (3) dergestalt umschlossen ist, dass eine kraftschlüssige und/oder formschlüssige Verbindung (8) zwischen dem Außenrohr (3) und dem Axialanschlag (2r) über dessen Fortsatz (7) realisiert ist, **dadurch gekennzeichnet, dass**
es sich bei der kraftschlüssigen und/oder formschlüssigen Verbindung (8) um eine Pressverbindung handelt,
eine zwischen Spiralwickel (6) und Außenrohr (3) angeordnete, rechteckige Folie (9) angeordnet ist, welche um den Spiralwickel (6) dergestalt herum gelegt ist, dass der Spiralwickel (6) an seinem Umfang von der Folie (9) komplett umschlossen ist, und wobei
der hülsenförmige Fortsatz (7) an seiner Innenseite mit der Folie (9) verklebt ist.

2. Spiralwickelmodul (0) nach Anspruch 1, **gekennzeichnet durch** einen Überlappungsbereich, in dem die Folie (9) sich selbst überlappt, wobei die Folie (9) in dem Überlappungsbereich mit sich selbst verklebt ist.

3. Spiralwickelmodul (0) nach einem der Ansprüche 1 oder 2, **dadurch gekennzeichnet, dass** die Folie (9) aus einem Werkstoff besteht, welcher ausgewählt ist aus der Gruppe bestehend aus Metall, Metalllegierung, Stahl, Aluminiumlegierung, Kupferlegierung.

4. Spiralwickelmodul (0) nach einem der Ansprüche 1 bis 3, **dadurch gekennzeichnet, dass** die Folie (9) aus einem Werkstoff besteht, welcher ausgewählt ist aus der Gruppe temperaturstabiler Polymere.

5. Spiralwickelmodul (0) nach Anspruch 4, **dadurch gekennzeichnet, dass** das temperaturstabile Polymere Polyimid ist.

6. Spiralwickelmodul nach einem der Ansprüche 1 bis 5, **dadurch gekennzeichnet, dass** der hülsenförmige Fortsatz (7) an seiner Innenseite mit dem Spiralwickel (6) verklebt ist.

## Claims

1. Spiral-wound module (0) comprising at least the following components:
a) a metallic, hollow cylindrical permeate tube (1), in the wall of which there are openings (5) that extend radially;
b) an essentially two-dimensional rectangular membrane wound in a spiral around the permeate tube (1), which forms an essentially cylindrical spiral winding (6) that extends coaxially to the permeate tube (1);
c) two axial stops (anti-telescoping devices ATD) (2r, 2f) that are fitted to the permeate tube (1) on either side of the spiral winding (6) and each abut the respective end face of the spiral winding (6), where the axial stops (2r, 2f) are provided with axially fluid-permeable passages (4);
d) a metallic, hollow cylindrical outer tube (3) that extends coaxially with respect to the permeate tube (1), surrounds the spiral winding (6) and is joined to the two axial stops (2r, 2f); where
e) at least one of the two axial stops (2r) has a sleeve-shaped extension (7) which, at its circumference, is surrounded by the outer tube (3) such that a force-fitting and/or form-fitting connection (8) is implemented between the outer tube (3) and the axial stop (2r) via the extension (7) thereof,
**characterized in that**
the force-fitting and/or form-fitting connection (8) is a press-fit connection,
a rectangular foil (9) is arranged which is disposed between the spiral winding (6) and outer tube (3) and is positioned around the spiral winding (6) such that the spiral winding (6) is completely surrounded by the foil (9) at its circumference, and where
the sleeve-shaped extension (7) is adhesively bonded to the foil (9) on its inside.

2. Spiral-wound module (0) according to Claim 1, **characterized by** an overlap region in which the foil (9) overlaps itself, where the foil (9) is adhesively bonded to itself in the overlap region.

3. Spiral-wound module (0) according to either of Claims 1 and 2, **characterized in that** the foil (9) consists of a material selected from the group consisting of metal, metal alloy, steel, aluminium alloy, copper alloy.

4. Spiral-wound module according to any of Claims 1 to 3, **characterized in that** the foil (9) consists of a material selected from the group of thermally stable polymers.

5. Spiral-wound module (0) according to Claim 4, **characterized in that** the thermally stable polymer is polyimide.

6. Spiral-wound module (0) according to any of Claims 1 to 5, **characterized in that** the sleeve-shaped extension (7) is adhesively bonded to the spiral winding (6) on its inside.

## Revendications

1. Module d'enroulement en spirale (0) comprenant au moins les composants suivants :
a) un tube de perméat (1) métallique, cylindrique creux, dans la paroi duquel s'étendent radialement des ouvertures (5) ;
b) une membrane rectangulaire essentiellement plane qui est enroulée en spirale autour du tube de perméat (1), ce par quoi est formé un enroulement en spirale (6) essentiellement cylindrique qui s'étend coaxialement au tube de perméat (1) ;
c) deux butées axiales (anti-telescoping devices -ATD) (2r, 2f) qui sont adaptées sur le tube de perméat (1) de part et d'autre de l'enroulement en spirale (6) et appliquées chacune contre la face frontale respective de l'enroulement en spirale (6), les butées axiales (2r, 2f) étant dotées de passages (4) axialement perméables aux fluides ;
d) un tube externe métallique cylindrique creux (3) qui s'étend coaxialement au tube de perméat (1), entoure l'enroulement en spirale (6) et est assemblé avec les deux butées axiales (2r, 2f) ;
e) au moins l'une des deux butées axiales (2r) présentant un prolongement (7) en forme de manchon, qui est entouré à sa périphérie par le tube externe (3), de sorte qu'une liaison (8) par adhérence et/ou complémentarité de forme est réalisée entre le tube externe (3) et la butée axiale (2r) par l'intermédiaire de son prolongement (7),
**caractérisé en ce que**
pour ce qui est de la liaison par adhérence et/ou complémentarité de forme (8) il s'agit d'une liaison par pression,
entre l'enroulement en spirale (6) et le tube externe (3) est disposée une feuille rectangulaire (9) qui est placée autour de l'enroulement en spirale (6) de façon telle que l'enroulement en spirale (6) est complètement entouré sur sa périphérie par la feuille (9), et
l'extension (7) en forme de manchon est collée sur sa face interne avec la feuille (9).

2. Module d'enroulement en spirale (0) selon la revendication 1, **caractérisé par** une zone de chevauchement dans laquelle la feuille (9) se chevauche elle-même, la feuille (9) étant collé à elle-même dans la zone de chevauchement.

3. Module d'enroulement en spirale (0) selon l'une quelconque des revendications 1 et 2, **caractérisé en ce que** la feuille (9) est constituée d'un matériau qui est choisi dans le groupe constitué par un métal, un alliage métallique, l'acier, un alliage d'aluminium, un alliage de cuivre.

4. Module d'enroulement en spirale selon l'une quelconque des revendications 1 à 3, **caractérisé en ce que** la feuille (9) est constituée d'un matériau qui est choisi dans le groupe des polymères thermostables.

5. Module d'enroulement en spirale (0) selon la revendication 4, **caractérisé en ce que** le polymère thermostable est un polyimide.

6. Module d'enroulement en spirale (0) selon l'une quelconque des revendications 1 à 5, **caractérisé en ce que** l'extension en forme de manchon (7) est collée sur sa face interne avec l'enroulement en spirale (6).
